# EUROPÄISCHE PATENTSCHRIFT

(11) **EP 2 988 383 B1**
(45) Veröffentlichungstag und Bekanntmachung des Hinweises auf die Patenterteilung: **23.06.2021**
(21) Anmeldenummer: 15181207.0
(22) Anmeldetag: 17.08.2015
(51) Int. Cl.: H02B 7/06, H02B 3/00

(54) **VERFAHREN ZUR SPANNUNGSFREIEN WARTUNG EINER ORTSFESTEN TRANSFORMATORSTATION UND MOBILE TRANSFORMATORSTATION**
METHOD FOR DE-ENERGISED MAINTENANCE OF A FIXED TRANSFORMER STATION AND MOBILE TRANSFORMER STATION
PROCÉDÉ D'ENTRETIEN HORS TENSION D'UNE STATION DE TRANSFORMATEUR FIXE ET STATION DE TRANSFORMATEUR MOBILE

(30) Priorität: 15.08.2014 DE 102014216280
(43) Veröffentlichungstag der Anmeldung: 24.02.2016
(73) Patentinhaber: EnBW Energie Baden-Württemberg AG, 76131 Karlsruhe (DE)
(72) Erfinder: Zwinz, Wolfgang, 70378 Stuttgart (DE); Schwollius, Ralf, 70569 Stuttgart (DE)
(74) Vertreter: DREISS Patentanwälte PartG mbB

(56) Entgegenhaltungen:
- CN-A- 101 794 973
- CN-A- 104 158 103
- CN-U- 202 217 944
- CN-U- 202 737 360
- DE-A1- 2 846 619
- US-A- 3 273 053

## Beschreibung

Die Erfindung betrifft ein Verfahren nach dem Oberbegriff des Anspruchs 1 sowie eine mobile Transformatorstation nach einem nebengeordneten Anspruch.

Es ist bekannt, dass zur Wartung bzw. Revision einer Transformatorstation an einem Mittelspannungsnetz insbesondere aus Gründen der Arbeitssicherheit die Transformatorstation frei geschaltet werden muss. Siehe zum Beispiel US 3 273 053 A. Ausserdem offenbart das Dokument Tab Mittelspannung: "Technische Anschlussbedingungen für den Anschluss an das Mittelspannungsnetz", 31. Dezember 2008 (2008-12-31) (URL:https://www.netze-duisburg.de/fileadmin/ swdu_netz/pdf/strom/2011-03-02_Ergaenzung_TAB_MS_01.pdf) eine ortsfeste Transformatorstation in einem Mittelspannungsnetz, mit zwei Netzbetreibereinspeisungen (Seite 50). Für die Dauer der auszuführenden Wartungs- bzw. Revisionsarbeiten kann eine Kundenanlage entweder für einen gewissen Zeitraum beispielsweise am Wochenende abgeschaltet werden oder aber es wird eine mobile Netzersatzanlage benötigt. Aufgrund der Größe ist deren Einsatz begrenzt. Darüber hinaus entstehen Emissionen wie Abgase, Lärm und Wärme. Des Weiteren muss die mobile Netzersatzanlage betankt werden. Auch sind Leistungsschwankungen auf Seiten der Kundenanlage nur schwer durch mobile Netzersatzanlagen abbildbar. Zusätzlich ist eine sichere Versorgung von sensiblen Anlagen, wie beispielsweise Rechenzentren oder Ähnlichem, nur bedingt durchführbar. Aufgabe der Erfindung ist es somit, die Wartung einer stationären bzw. ortsfesten Transformatorstation zu verbessern.

Die der Erfindung zugrunde liegende Aufgabe wird durch ein Verfahren nach dem Anspruch 1 und eine mobile Transformatorstation nach einem nebengeordneten Anspruch gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch unterschiedlichen Kombinationen für die Erfindung wichtig sein können, ohne dass hierauf nochmals explizit hingewiesen wird.

Vorteilhaft ist eine mobile Transformatorstation parallel zu einer ortsfesten Transformatorstation schaltbar. Vorteilhaft ist die ortsfeste Transformatorstation mittels der mobilen Transformatorstation spannungsfrei betreibbar. Somit wird erreicht, dass eine Kundenanlage sicher mit Strom aus dem Mittelspannungsnetz versorgt wird. Zum anderen wird ermöglicht, dass die ortsfeste Transformatorstation spannungsfrei wartbar ist. So wird die Arbeitssicherheit bei Wartungen und/oder Revisionen der stationären Transformatorstation erhöht. Des Weiteren können die Wartungsarbeiten vorteilhaft innerhalb der Rahmensarbeitszeiten durchgeführt werden, da ein Ausweichen auf Nacht- oder Wochenendtermine durch die sichergestellte Versorgung der Kundenanlage nicht mehr nötig ist. Darüber hinaus kann auch über einen längeren Zeitraum eine stabile und zuverlässige Stromversorgung der Kundenanlage ermöglicht werden.

Gegenüber einer mobilen Netzersatzanlage entfallen die Emissionen wie Abgase, Lärm und Wärme. Des Weiteren ergeben sich auch Vorteile bei Störungen im Bereich der ortsfesten Transformatorstation und/oder der Kundenanlage. Darüber hinaus entfällt ein bei einer Zuschaltung einer Netzersatzanlage notwendiges Synchronisieren, was gerade bei starken Lastschwankungen trotz einer zur Verfügung stehenden Synchronisierungsautomatik zu Problemen führen kann. Vorteilhaft kann diese Unsicherheit durch die nicht mehr notwendige Synchronisierung ausgeschlossen werden.

Gemäß der Erfindung wird die mobile Transformatorstation zunächst parallel zu der ortsfesten Transformatorstation betrieben und anschließend wird die ortsfeste Transformatorstation spannungsfrei geschaltet. Vorteilhaft können in dieser Reihenfolge eine Wartung und/oder ein Austausch der stationären bzw. ortsfesten Transformatorstation durchgeführt werden.

In einem Beispiel ist die ortsfeste Transformatorstation zunächst spannungsfrei gestaltet und anschließend wird die mobile Transformatorstation parallel zu der ortsfesten Transformatorstation betrieben. Vorteilhaft können hierdurch Störungen behandelt werden. Beispielsweise kann bei einem Ausfall und/oder einer Störung der ortsfesten Transformatorstation diese automatisch oder manuell spannungsfrei geschaltet werden. Durch den Anschluss der mobilen Transformatorstation an das Mittelspannungsnetz und an die Kundenanlage kann zunächst ein Betrieb der Kundenanlage wieder hergestellt werden. Durch einen anschließenden Parallelbetrieb der mobilen und der ortsfesten Transformatorstationen und eine folgende Ab- bzw. Wegschaltung der mobilen Transformatorstation wird es ermöglicht, die Zeit bis zur vollkommenen Wiederherstellung der ortsfesten Transformatorstation vorteilhaft zu überbrücken.

gGemäß der Erfindung wird eine erste spannungsfrei geschaltete Netzbetreiber-Einspeisung der ortsfesten Transformatorstation mittelspannungsseitig mit einer ersten Netzbetreiber-Einspeisung der mobilen Transformatorstation verbunden. Die Kundenanlage wird niederspannungsseitig mit der mobilen Transformatorstation verbunden. Die ortsfeste Transformatorstation wird von dem Mittelspannungsnetz und von der Kundenanlage getrennt. Durch diese Ausführungsform lassen sich vorteilhaft Wartung, Störung und Austausch der ortsfesten Transformatorstation realisieren. Insbesondere wird der Parallelbetrieb der mobilen und ortsfesten Transformatorstation erreicht.

Gemäß der Erfindung wird eine zweite Netzbetreiber-Einspeisung der ortsfesten Transformatorstation spannungsfrei geschaltet, wodurch nach dem Parallelbetrieb der beiden Transformatorstationen die ortsfeste Transformatorstation zur Wartung spannungsfrei geschaltet ist und die mobile Transformatorstation zur Versorgung der Kundenanlage dient. Gemäß der Erfindung wird eine zweite spannungsfrei geschaltete Netzbetreiber-Einspeisung der ortsfesten Transformatorstation mittelspannungsseitig mit einer zweiten Netzbetreiber-Einspeisung der mobilen Transformatorstation verbunden. Dadurch wird vorteilhaft der Austausch der ortsfesten Transformatorstation ermöglicht und ein vollwertiger Betrieb der Kundenanlage mit der mobilen Transformatorstation durch redundante Versorgung wird gewährleistet.

In einer vorteilhaften Weiterbildung wird ein niederspannungsseitiger Lasttrennschalter der mobilen Transformatorstation nur zu einem Schließen freigegeben, soweit eine Phasenlage zu beiden Seiten des Lasttrennschalters im Wesentlichen übereinstimmt. Dadurch wird vorteilhaft ein fehlerhafter Anschluss der Verbindungskabel auf der Niederspannungsseite verhindert, wodurch eine unterbrechungsfreie Versorgung der Kundenanlage gewährleistet wird.

In einer vorteilhaften Ausführungsform umfasst die mobile Transformatorstation einen ölisolierten Transformator, der im Vergleich beispielsweise zu einem Gießharztransformator günstiger und kleiner ist und darüber hinaus den Arbeitsschutz verbessert.

In einer weiteren Ausführungsform ist der Transformator als Regel-Transformator ausgebildet. Dadurch wird vorteilhaft erreicht, dass auch hohe Lastschwankungen auf der Seite der Kundenanlage toleriert werden können. Darüber hinaus wird es ermöglicht, Rückspeiseanlagen, wie beispielsweise Fotovoltaikanlagen, weiter zu betreiben, ohne dass deren Abschaltung während der Wartung, Störung bzw. während des Austauschs der ortsfesten Transformatorstation nötig ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Hierbei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen:
- Fig. 1 und 3: ein schematisches Schaltbild mit einer ortsfesten und einer mobilen Transformatorstation;
- Fig. 2 und 4: jeweils ein schematisches Ablaufdiagramm; und
- Fig. 5 und 6: jeweils einen schematischen Aufbau eines Ringnetzes.

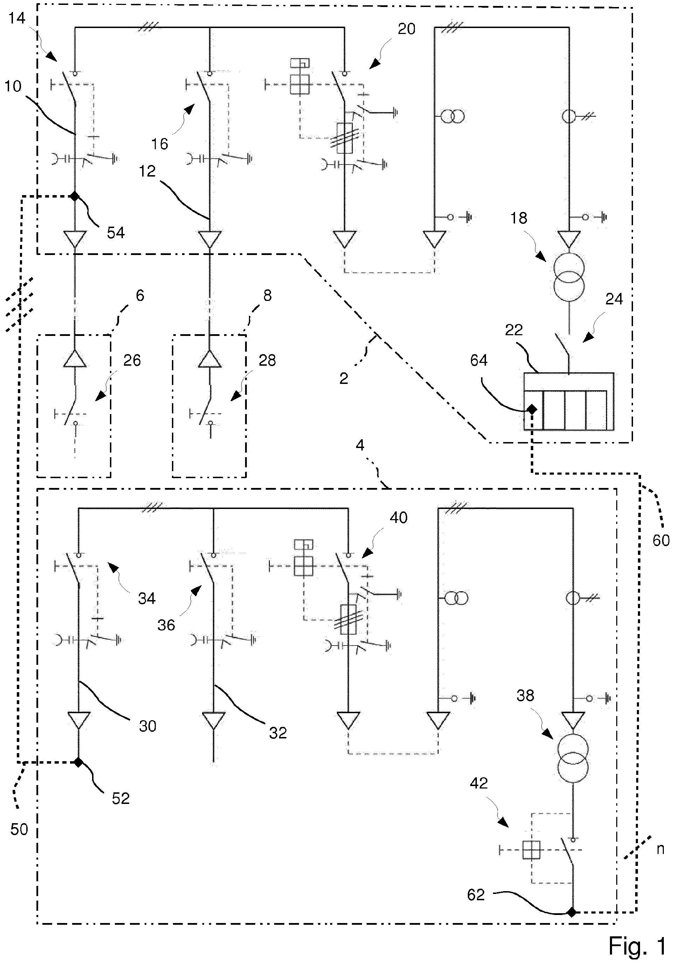

Figur 1 zeigt ein schematisches Schaltbild mit einer ortsfesten Transformatorstation 2 und einer mobilen Transformatorstation 4. Die stationäre bzw. ortsfeste Transformatorstation 2 wird mittelspannungsseitig von einer ersten Nachbarstation 6 und einer zweiten Nachbarstation 8 versorgt. Die erste Nachbarstation 6 ist mit einer ersten Netzbetreiber-Einspeisung 10 der ortsfesten

Transformatorstation 2 verbunden. Die zweite Nachbarstation 8 ist mit einer zweiten Netzbetreiber-Einspeisung 12 der ortsfesten Transformatorstation 2 verbunden. Der ersten Netzbetreiber-Einspeisung 10 ist ein erster Lasttrennschalter 14 zugeordnet. Der zweiten Netzbetreiber-Einspeisung 12 ist ein zweiter Lasttrennschalter 16 zugeordnet. Die Übergabe zu einem Transformator 18 der Transformatorstation 2 umfasst einen Sicherungslasttrennschalter 20. Zwischen dem Transformator 18 und einer Kundenanlage 22, die vorliegend vereinfacht als Niederspannungshauptverteilung dargestellt ist, ist ein Trennschalter 24 angeordnet. Die erste Nachbarstation 6 umfasst einen dritten Lasttrennschalter 26. Die zweite Nachbarstation 8 umfasst einen vierten Lasttrennschalter 28. Die mobile Transformatorstation 4 ist zum Betrieb an einem Mittelspannungsnetz mit einer Spannung oberhalb von 1kV, insbesondere 10KV und 20KV ausgebildet.

Die mobile Transformatorstation 4 umfasst eine erste Netzbetreiber-Einspeisung 30 und eine zweite Netzbetreiber-Einspeisung 32. Der ersten Netzbetreiber-Einspeisung 30 ist ein fünfter Lasttrennschalter 34 zugeordnet. Der zweiten Netzbetreiber-Einspeisung 32 ist ein sechster Lasttrennschalter 36 zugeordnet. Die mobile Transformatorstation 4 umfasst einen Transformator 38. Der Transformator 38 umfasst bevorzugt einen mittelspannungsseitigen Schalter zum Betrieb an einem 10KV-, 20KV- oder 35KV-Mittelspannungsnetz. Zur Übergabe für den Transformator 38 ist zwischen dem Transformator 38 und den Netzbetreiber-Einspeisungen 30, 32 ein zweiter Sicherungslasttrennschalter 40 angeordnet. Niederspannungsseitig umfasst die mobile Transformatorstation 4 einen siebten Lasttrennschalter 42. Der siebte Lasttrennschalter 42 ist derart ausgebildet, dass ein Schließen des Lasttrennschalters 42 nur dann durchführbar ist, wenn eine Phasenlage zu beiden Seiten des Lasttrennschalters 42 im Wesentlichen übereinstimmt.

Eine erste Kabelverbindung 50 ist mittelspannungsseitig zu einem Verbinden der ersten Netzbetreiber-Einspeisungen 10 und 30 vorgesehen. Auf Seiten der mobilen Transformatorstation 4 befindet sich ein mittelspannungsseitiger Angriff 52 außerhalb des Schaltfeldes für die erste Netzbetreiber-Einspeisung 30. Ein Angriff 54 auf Seiten der ersten Nutzbetreiber-Einspeisung 10 der stationären Transformatorstation 2 ist bevorzugt innerhalb des Schaltfeldes der ersten Netzbetreiber-Einspeisung 10 angeordnet. Der Angriff 52 wird bevorzugt durch ein Stecker-/Buchsensystem realisiert. Der Angriff 54 hingegen wird bevorzugt derart ausgeführt, dass der Angriff 54 innerhalb des Schaltfeldes oder im Bereich des Schaltfeldes beispielsweise durch Stromschienenklemmen realisiert ist.

Niederspannungsseitig werden die Kundenanlage 22 und der Niederspannungsausgang der mobilen Transformatorstation 4 mit einer zweiten Kabelverbindung 60 verbunden. Ein Angriff 62 für die Kabelverbindung 60 ist bevorzugt als Stecker-/Buchsensystem ausgeführt. Ein Angriff 64 der zweiten Kabelverbindung 60 ist für die Kundenanlage 22 als Stecker-/Buchsensystem ausgeführt. Zur Verbindung mit der Kundenanlage 22, beispielsweise einer Niederspannungshauptverteilung, ist der Angriff 64 beispielsweise durch Sammelschienenabgriffe oder V-Klemmen auf einer Schaltleiste ausgebildet.

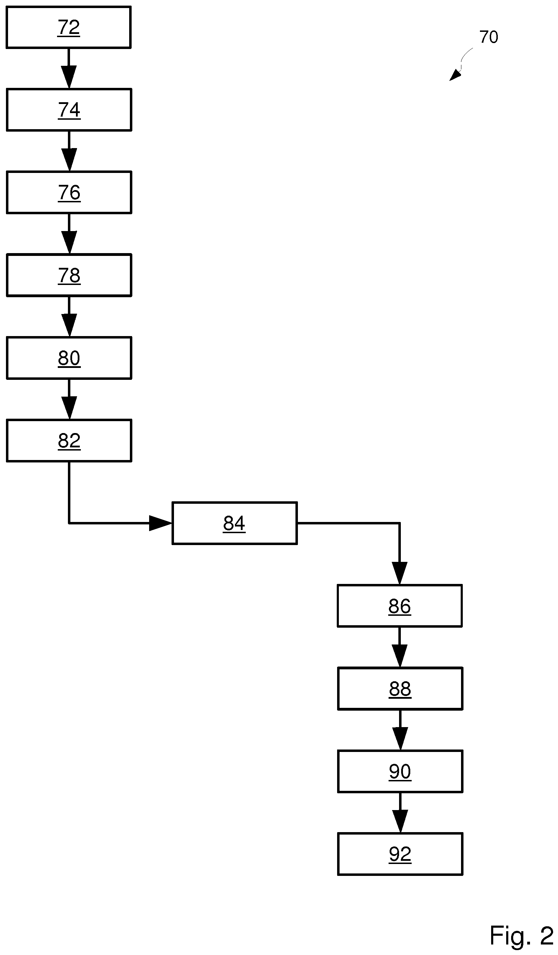

Figur 2 zeigt ein schematisches Ablaufdiagramm 70. Anhand des Ablaufdiagramms 70 wird eine spannungsfreie Wartung des ortsfesten Transformators 2 beschrieben. Die mobile Transformatorstation 4 wird zunächst parallel zu der ortsfesten Transformatorstation 2 betrieben und anschließend wird die ortsfeste Transformatorstation 2 spannungsfrei geschaltet, wobei mit einem Parallelbetrieb der Stationen 2 und 4 eine gemeinsame Energieversorgung der Kundenanlage 22 mittels der Stationen 2 und 4 gemeint ist.

In einem Ausgangszustand 72 wird die ortsfeste Transformatorstation 2 in einem Normalbetrieb zur Versorgung der Kundenanlage 22 betrieben. Hierzu sind die Schalter 14, 16, 20, 24, 26 und 28 geschlossen. Die Kabelverbindungen 50, 60 sind noch nicht mit der ortsfesten Transformatorstation 2 verbunden. Auf den Schritt 72 bzw. Ausgangszustand 72 folgt ein Schritt 74.

In dem Schritt 74 wird die erste Netzbetreiber-Einspeisung 10 spannungsfrei geschaltet und geerdet, was durch das Öffnen der Schalter 14 und 26 durchgeführt wird.

In einem auf den Schritt 74 folgenden Schritt 76 wird die Kundenanlage 22 über die Nachbarstation 8 mit Energie versorgt. Die spannungsfrei geschaltete erste Netzbetreiber-Einspeisung 10 kann nunmehr über die Kabelverbindung 50 mit der ersten Netzbetreiber-Einspeisung 30 verbunden werden. Ebenso wird in dem Schritt 76 die Kundenanlage 22 mittels der Kabelverbindung 60 niederspannungsseitig mit der mobilen Transformatorstation 4 verbunden. Im und vor dem Schritt 76 befindet sich der Schalter 42 in einem geöffneten Zustand. Die Schalter 34 und 40 befinden sich ebenfalls bevorzugt in einem geöffneten Zustand.

In Schritten 78 und 80 wird die mobile Transformatorstation 4 zu der ortsfesten Transformatorstation 2 zugeschaltet. In dem Schritt 78 werden die Schalter 26, 34 und 40 geschlossen.

In dem Schritt 80 wird nach positiver Prüfung der Phasengleichheit zu beiden Seiten des Schalters 42 der Schalter 42 geschlossen. Somit wird nach Ausführung des Schritts 80 ein Parallelbetrieb der Transformatorstationen 2 und 4 zur Versorgung der Kundenanlage 22 durchgeführt.

In einem auf den Schritt 80 folgenden Schritt 82 werden die Schalter 28 und 24 geöffnet. Nach Ausführung des Schrittes 82 kann in einem Schritt 84 die Wartung der ortsfesten Transformatorstation 2 erfolgen, wobei gleichzeitig die Energieversorgung der Kundenanlage 22 durch die mobile Transformatorstation 4 gewährleistet ist. In dem Schritt 84 ist damit ein Bereich zwischen dem Schalter 14, dem Schalter 28 und dem Schalter 24 in der ortsfesten Transformatorstation 2 spannungsfrei und bevorzugt geerdet und die ortsfeste Transformatorstation 2 kann damit zu einer vollen Wartung bzw. Revision zugänglich gemacht werden.

Soll hingegen die gesamte Transformatorstation 2 mit Ausnahme der Kundenanlage 22 ausgetauscht werden, so wird der Abgriff 54 außerhalb des Schaltfeldes der ersten Netzbetreiber-Einspeisung 10 erfolgen. Somit kann vorteilhaft auch ein Ersatz der ortsfesten Transformatorstation 2 erfolgen.

Nach einer durchgeführten Wartung bzw. Revision bzw. einem Austausch der ortsfesten Transformatorstation 2 wird in einem auf den Schritt 84 folgenden Schritt 86 die ortsfeste Transformatorstation 2 wieder in Betrieb genommen. Hierzu werden die Schalter 28, 16 und 24 geschlossen. Vor dem Schließen des Schalters 24 findet bevorzugt eine manuelle Phasenprüfung zu beiden Seiten des Schalters 24 statt.

In dem Schritt 84 können die Schalter 16, 20 und 24 sowie der Transformator 18 gewartet bzw. Instand gesetzt werden. In einem weiteren, nicht dargestellten Schritt bzw. weiteren Verfahren werden zur Wartung des dem Schalter 14 zugehörigen Feldes, nachdem die Anlage 2 über die Einspeisung 50 versorgt wird, die Schalter 28 und 16 geöffnet und die Verbindung 50 an die Netzbetreiber-Einspeisung 12 angeschlossen. Anschließend werden die Schalter 28, 36 und 40 geschlossen. Nach erfolgtem Ausphasen wird der Schalter 42 geschlossen, wodurch die mobile Transformatorstation 4 parallel die Versorgung der Kundenanlage 22 aufnimmt. Danach werden die Schalter 14, 24 und 26 geöffnet, wodurch die mobile Transformatorstation 4 die gesamte Last aufnimmt. Anschließend können der Schalter 14 und das zugehörige Feld gewartet werden. Nach der Wartung der Schalters 14 und des zugehörigen Schaltfelds wird die Einspeisung 10 durch Schließen der Schalter 14 und 24 wieder in Betrieb genommen, womit die stationäre Transformatorstation 2 die Last wieder übernimmt. Anschließend werden die Schalter 40, 42, 34 und 28 geöffnet und die Verbindungen 50 und 60 demontiert. Dann wird die Einspeisung 12 sowie die Schalter 28 und 16 wieder in Betrieb genommen, wodurch die Wartungsarbeit beendet ist.

In einem auf den Schritt 86 folgenden Schritt 88 wird der Schalter 26 geöffnet, womit die erste Netzbetreiber-Einspeisung 10 im Wesentlichen spannungsfrei ist.

In einem auf den Schritt 88 folgenden Schritt 90 werden die erste und die zweite Kabelverbindung 50 und 60 entfernt.

In einem auf den Schritt 90 folgenden Schritt 92 werden die Schalter 14 und 26 geschlossen, womit wieder der Normalbetrieb der ortsfesten Transformatorstation 2 hergestellt ist.

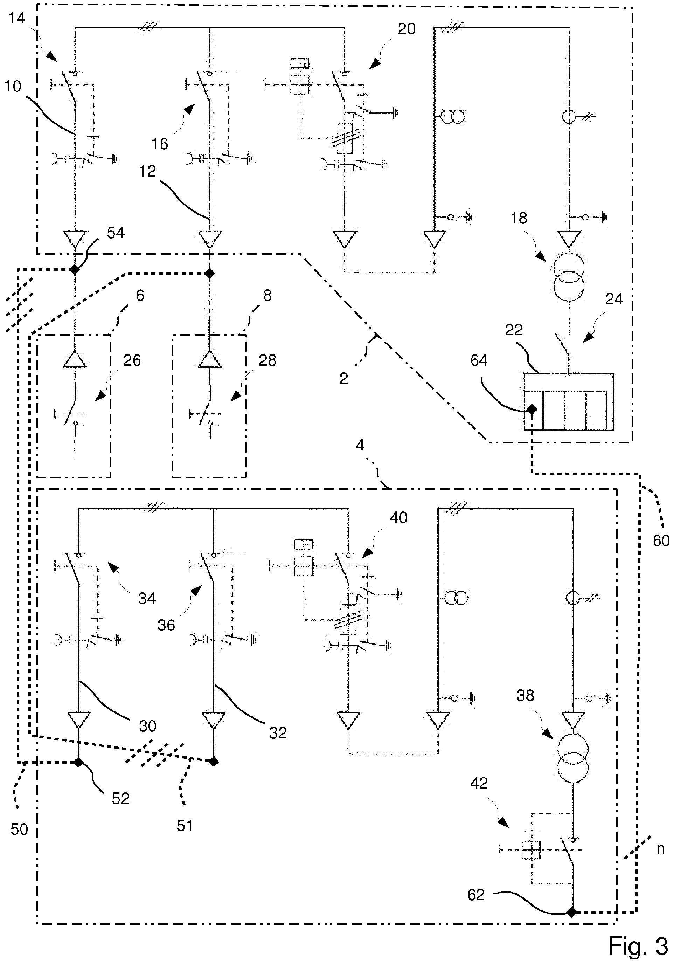

Figur 3 zeigt im Unterschied zu Figur 1 eine dritte mittelspannungsseitige Kabelverbindung 51 zwischen den zweiten Netzbetreiber-Einspeisungen 12 und 32. Des Weiteren ist der Angriff 54 auf beiden mittelspannungsseitigen Kabelverbindungen außerhalb des Schaltfeldes der ersten und zweiten Netzbetreiber-Einspeisung 10, 12 angeordnet. Hierdurch wird ein vollwertiger Ersatz für die ortsfeste Transformatorstation 2 geschaffen, wodurch die ortsfeste Transformatorstation 2 auch tage- oder wochenweise nicht in Betrieb sein kann.

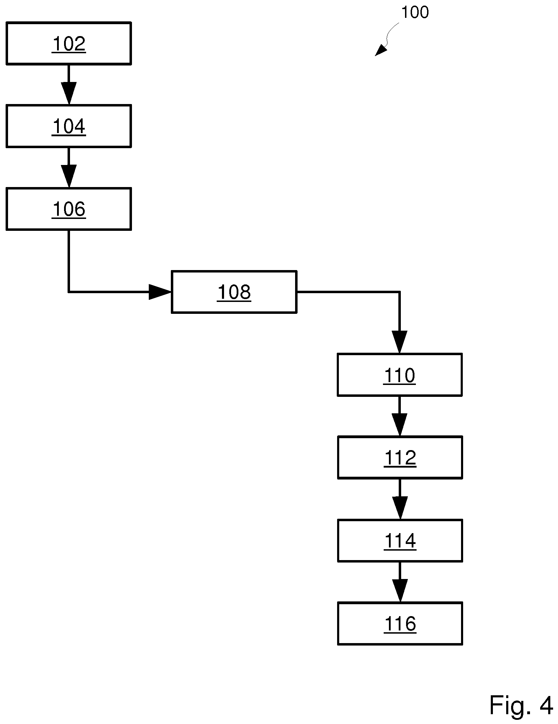

Figur 4 zeigt ein schematisches Ablaufdiagramm 100. Das Ablaufdiagramm 100 dient zur Erläuterung des Einsatzes der mobilen Transformatorstation 4 im Falle einer Störung bzw. eines Ausfalls im Bereich der ortsfesten Transformatorstation 2.

Der erste Schritt 102 stellt die Ausgangssituation dar. In dem Schritt 102 sind die Kabelverbindungen 50 und 60 nicht an die ortsfeste Transformatorstation 2 angeschlossen. Alle Schalter der mobilen Transformatorstation 4 sind geöffnet. Im Falle eines Fehlers im Bereich des Transformators 18 ist der Schalter 20 geöffnet. Alternativ oder zusätzlich kann auch eine oder beide der Netzbetreiber-Einspeisungen 10 und 12 von den Nachbarstationen 6 und 8 bzw. vom Mittelspannungsnetz im Allgemeinen getrennt sein.

Nach der Identifikation der betroffenen ortsfesten Transformatorstation 2 wird in einem auf den Schritt 102 folgenden Schritt 104 die erste Netzbetreiber-Einspeisung 10 durch Öffnen der Schalter 14 und 26 spannungsfrei geschalten. Sollte der Schalter 28 nicht geöffnet sein, so wird auch der Schalter 28 geöffnet.

Nach einem auf den Schritt 104 folgenden Schritt 106 werden die Kabelverbindungen 50 und 60 zwischen der stationären Transformatorstation 2 und der mobilen Transformatorstation 4 wie in Figur 1 angeordnet und anschließend werden die Schalter 26, 34, 40 und 42 geschlossen, wodurch eine Versorgung der Kundenanlage 22 mittels der mobilen Transformatorstation 4 wieder aufgenommen wird.

In einem auf den Schritt 106 folgenden Schritt 108 kann der spannungsfrei geschaltete Teil der ortsfesten Transformatorstation 2 gewartet werden und der Fehler behoben werden.

In einem auf den Schritt 108 folgenden Schritt 110 werden die Schalter 28, 16 und 20 geschlossen.

In einem auf den Schritt 110 folgenden Schritt 112 wird nach einer manuellen Phasenprüfung zu beiden Seiten des Schalters 24 der Schalter 24 geschlossen. Damit werden nach Ausführung des Schritts 112 die Transformatorstationen 2 und 4 parallel zueinander zur Versorgung der Kundenanlage 22 betrieben.

In einem Schritt 114, der auf den Schritt 112 folgt, werden die Schalter 26 und 14 geöffnet und die Kabelverbindungen 50 und 60 können entfernt werden. In einem auf den Schritt 114 folgenden Schritt 116 werden die Schalter 14 und 26 geschlossen, womit ein Normalbetrieb der Transformatorstation 2 wieder hergestellt ist.

In einer alternativen Ausführungsform soll die ortsfeste Transformatorstation 2 ersetzt oder in vollem Umfang gewartet werden, was auch anhand der Figur 4 erläutert wird. Bei diesem Ersetzen der Station 2 wird die Kundenanlage 22 unterbrechungsfrei mit Energie versorgt. In einer Ausgangssituation hängen beide Netzbetreiber-Einspeisungen 10 und 12 aktiv am Versorgungsnetz und die Schalter 34, 36, 40 und 42 der mobilen Transformatorstation 4 sind geöffnet. In einem auf diese Ausgangssituation folgenden Schritt 102 werden die Schalter 14 und 26 geöffnet, um die Kabelverbindung 50 gemäß Figur 3 anzuordnen. Ebenfalls kann in diesem Schritt 102 die Kabelverbindung 60 angeordnet werden.

Im Schritt 104 werden die Schalter 26, 34, 40 und 42 geschlossen, um die mobile Transformatorstation 4 parallel zu der stationären Transformatorstation 2 zur Energieversorgung der Kundenanlage 22 zu betreiben.

Im Schritt 106 werden die Schalter 16 und 28 geöffnet, um die Kabelverbindung 51 gemäß Figur 3 anzuordnen.

In einem in Figur 4 nicht dargestellten Schritt zwischen den Schritten 106 und 108 werden die Schalter 28 und 36 geschlossen und anschließend wird der Schalter 24 geöffnet. Bis auf die Kundenanlage 22 ist die stationäre Transformatorstation 22 dann spannungsfrei geschaltet und kann in dem Schritt 108 gewartet oder gar ersetzt werden. Auch ist ein tageweiser oder gar wochenweiser Ersatzbetrieb durch die mobile Transformatorstation 4 denkbar.

In dem Schritt 110, der auf den Schritt 108 folgt, werden die Schalter 16 und 28 geöffnet und die Kabelverbindung 51 entfernt. In dem folgenden Schritt 112 werden die Schalter 16, 28 und 24 geschlossen, um die Kundenanlage 22 mittels der ortsfesten Transformatorstation 2 parallel zu der mobilen Transformatorstation 4 zu versorgen.

In dem Schritt 114, der auf den Schritt 112 folgt, werden die Schalter 42, 26 und 14 geöffnet und die Kabelverbindungen 50 und 60 können entfernt werden. In einem auf den Schritt 114 folgenden Schritt 116 werden die Schalter 14 und 16 geschlossen, womit ein Normalbetrieb der Transformatorstation 2 wieder hergestellt ist.

Die mobile Transformatorstation 4 ist bevorzugt auf einem Anhänger zur Anordnung an Zugfahrzeuge angeordnet. Bevorzugt werden die Kabelverbindungen 50 und 60 auf der mobilen Transformatorstation 4 zum Transport mitgeführt.

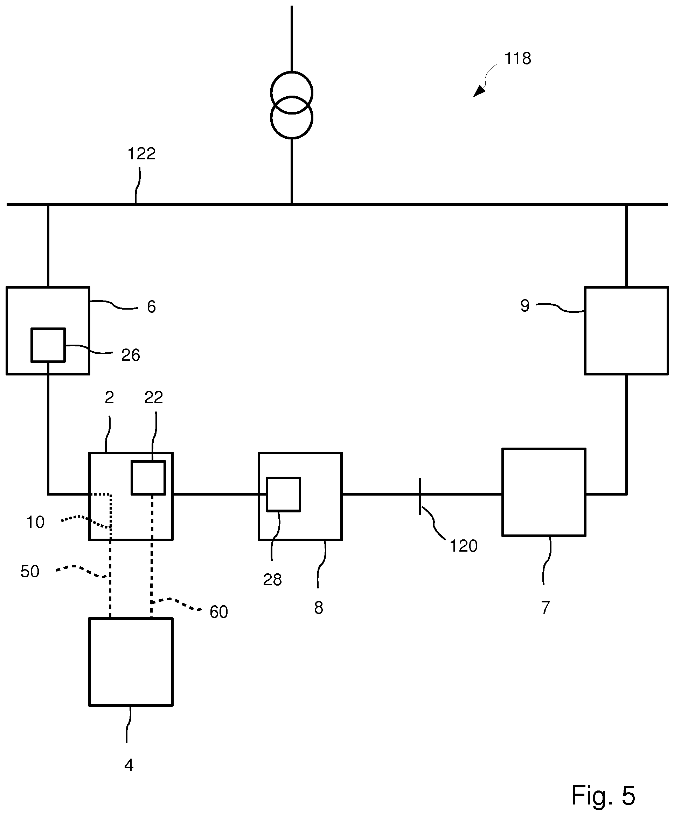

Figur 5 zeigt einen schematischen Aufbau eines Ringnetzes 118 mit der ortsfesten Transformatorstation 2, der ersten Nachbarstation 6, der zweiten Nachbarstation 8 sowie durch eine Trennstelle 120 von den Stationen 2, 6 und 8 getrennte ortsfeste Transformatorstationen 7 und 9. Die Transformatorstationen 6, 2, 8, 7 und 9 sind in dieser Reihenfolge zu einem Ring im Sinne einer Ringtopologie zusammengeschlossen. Der Ring ergibt sich durch den Anschluss der Stationen 6 und 9 an eine Mittelspannungsebene 122.

Die Trennstelle 120 ist in einem Normalbetrieb geöffnet, um eine Fehlerlokalisierung innerhalb des Ringnetzes 118 zu ermöglichen. Sind entsprechende Vorrichtungen zur Fehlerstromerkennung vorhanden, kann in dem Normalbetrieb die Trennstelle 120 auch geschlossen sein. Zur Ausführung des Verfahrens gemäß den Figuren 1 und 2 wird die Trennstelle 120, die beispielsweise als Lastschalter oder Leistungsschalter ausgestaltet ist, geschlossen, falls Sie in dem Normalbetrieb noch nicht geschlossen ist. Damit wird die Nachbarstation 8 von der Unterstation 7 versorgt, womit auch die ortsfeste Transformatorstation 2 von der Nachbarstation 8 versorgbar ist.

Führt man nun das Verfahren gemäß der Figur 2 aus, so lässt sich die ortsfeste Transformatorstation 2 mittels der mobilen Transformatorstation 4 und mittels der Verbindungen 50 und 60 zu der ortsfesten Transformatorstation 2 zumindest teilweise spannungsfrei schalten, ohne dass eine niederspannungsseitige Versorgungsunterbrechung im Bereich der Kundenanlage 22 stattfindet. Beispielhaft ist in der Figur 5 gezeigt, wie mittels der Verbindung 50 und mittels der ersten Netzbetreiber-Einspeisung 10, die mobile Transformatorstation 4 mittelspannungsseitig mit der benachbarten Station 6 und dem geschlossenen Schalter 26 stromführend verbunden ist. Damit ist die stationäre Transformatorstation 2 mittels der mobilen Transformatorstation 4 zum Teil spannungsfrei schaltbar, was bedeutet, dass die Schalthandlungen, die zu Figur 2 beschrieben sind, dazu führen, dass die mobile Transformatorstation 4 zur unterbrechungsfreien Energieversorgung der Kundenanlage 22 genutzt wird.

Wie bereits zuvor zu Figur 1 beschrieben kann der nicht spannungsfrei geschaltete Teil der ortsfesten Transformatorstation 2, d.h. die erste Netzbetreiber-Einspeisung 10 und der zugehörige Schalter 14, dadurch spannungsfrei geschaltet werden, dass die zweite Netzbetreiber-Einspeisung 12 zur Versorgung der Kundenanlage 22 genutzt wird. Hierzu wird bei geschlossener Trennstelle 22 eine weitere Verbindung 50 analog zur gezeigten Verbindung 50 an die zweite Netzbetreiber-Einspeisung 12 angeschlossen, womit die mobile Transformatorstation 4 von Seiten der Nachbarstation 8 mit Energie versorgt wird. Die in der Figur 5 gezeigte Verbindung 50 kann dann stromlos geschaltet und entfernt werden, woraufhin die erste Netzbetreiber-Einspeisung 10 stromlos und damit wartbar ist.

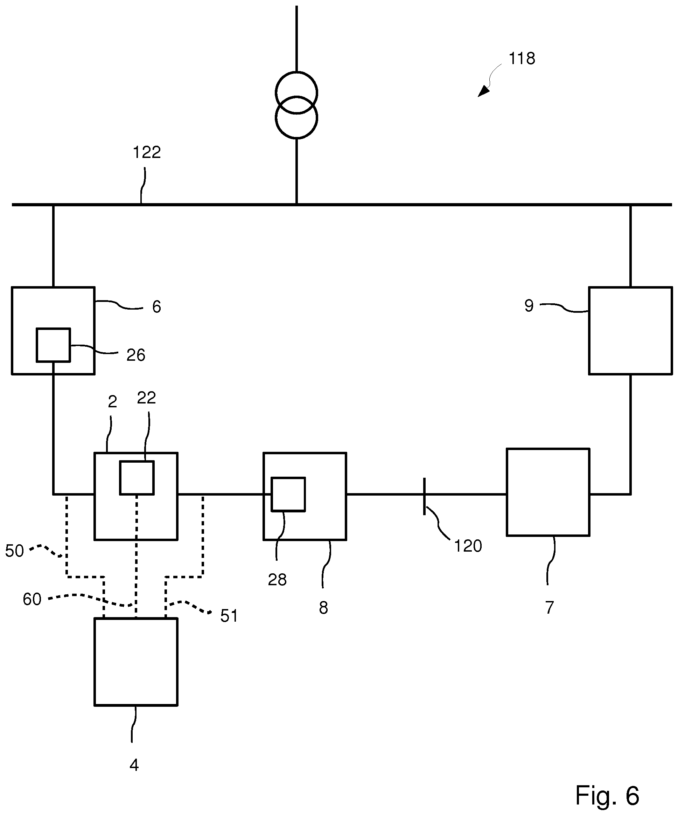

Figur 6 zeigt den schematischen Aufbau eines Ringnetzes 118 im Sinne der Figur 5. Im Unterschied zu Figur 5 ist die mobile Transformatorstation 4 gemäß dem Verfahren nach den Figuren 3 und 4 angeschlossen. Auch in Figur 6 ist oder wird zur Inbetriebnahme der mobilen Transformatorstation 4 die Unterbrechungsstelle 120 geschlossen. Anschließend werden die stationäre Transformatorstation 2 und die mobile Transformatorstation mit den Verbindungen 50, 51 und 60 verbunden. Damit ist die stationäre Transformatorstation 2 mittels der mobilen Transformatorstation 4 gänzlich spannungsfrei schaltbar, was bedeutet, dass die Schalthandlungen, die zu Figur 4 beschrieben sind, dazu führen, dass die mobile Transformatorstation 4 zum einen zur Vorbeiführung des Versorgungsstroms an der stationären Transformatorstation 2 und zum anderen zur unterbrechungsfreien Energieversorgung der Kundenanlage 22 genutzt wird.

## Patentansprüche

1. Verfahren zur spannungsfreien Wartung einer ortsfesten Transformatorstation (2) an einem Mittelspannungsnetz,
- wobei in einem Normalbetrieb der ortsfesten Transformatorstation (2) eine erste Nachbarstation (6) mit einer ersten Netzbetreiber-Einspeisung (10) der ortsfesten Transformatorstation (2) verbunden ist (72),
- wobei in dem Normalbetrieb der ortsfesten Transformatorstation (2) eine zweite Nachbarstation (8) mit einer zweiten Netzbetreiber-Einspeisung (12) der ortsfesten Transformatorstation (2) verbunden ist (72),
- wobei die erste Netzbetreiber-Einspeisung (10) der ortsfesten Transformatorstation (2) spannungsfrei geschaltet wird (74), wobei ein der ersten Netzbetreiber-Einspeisung (10) der ortsfesten Transformatorstation (2) zugeordneter Lasttrennschalter (14) geöffnet wird, und wobei ein der ersten Nachbarstation (6) zugeordneter Lasttrennschalter (26) geöffnet wird,
- wobei die erste spannungsfrei geschaltete Netzbetreiber-Einspeisung (10) der ortsfesten Transformatorstation (2) mittels einer ersten Kabelverbindung (50) mittelspannungsseitig mit einer ersten Netzbetreiber-Einspeisung (30) einer mobilen Transformatorstation (4) verbunden wird (76),
- wobei eine Kundenanlage (22) mittels einer zweiten Kabelverbindung (60) niederspannungsseitig mit der mobilen Transformatorstation (4) verbunden wird (76),
- wobei die mobile Transformatorstation (4) parallel zu der ortsfesten Transformatorstation (2) betrieben wird (78, 80), wobei der der ersten Nachbarstation (6) zugeordnete Lasttrennschalter (26) geschlossen wird, wobei ein der ersten Netzbetreiber-Einspeisung (30) der mobilen Transformatorstation (4) zugeordneter Lasttrennschalter (34) geschlossen wird, wobei ein Sicherungslasttrennschalter (40) der mobilen Transformatorstation (4) geschlossen wird, und wobei ein niederspannungsseitiger Lasttrennschalter (42) der mobilen Transformatorstation (4) geschlossen wird,
- wobei die ortsfeste Transformatorstation (2) mittels der mobilen Transformatorstation (4) spannungsfrei geschaltet wird (82), wobei die ortsfeste Transformatorstation (2) durch Öffnen eines Lasttrennschalters (28) der zweiten Nachbarstation (8) von dem Mittelspannungsnetz und durch Öffnen eines Trennschalters (24) der ortsfesten Transformatorstation (2) von der Kundenanlage (22) getrennt wird, und wobei die zweite Nachbarstation (8) von der zweiten Netzbetreiber-Einspeisung (12) der ortsfesten Transformatorstation (2) getrennt wird,
- wobei die zweite spannungsfrei geschaltete Netzbetreiber-Einspeisung (12) der ortsfesten Transformatorstation (2) mittels einer Kabelverbindung (51) mittelspannungsseitig mit einer zweiten Netzbetreiber-Einspeisung (32) der mobilen Transformatorstation (4) verbunden wird, und
- wobei der Lasttrennschalter (28) der zweiten Nachbarstation (8) geschlossen wird.

2. Verfahren nach Anspruch 1, wobei der niederspannungsseitige Lasttrennschalter (42) der mobilen Transformatorstation (4) nur schließbar ist, soweit eine Phasenlage zu beiden Seiten des Lasttrennschalters (42) im Wesentlichen übereinstimmt.

3. Verfahren nach einem der vorstehenden Ansprüche, wobei die mobile Transformatorstation (4) einen Transformator (38) umfasst, der als ölisolierter Transformator und/oder Regeltransformator ausgebildet ist.

4. Mobile Transformatorstation (4), welche für das Verfahren gemäß einem der vorigen Ansprüche ausgebildet ist.

5. Ringnetz (118) mit einer stationären Transformatorstation (2) und einer mobilen Transformatorstation (4) gemäß dem Anspruch 4.

## Claims

1. Method for de-energized maintenance of a stationary transformer station (2) on a medium-voltage network,
- wherein, during normal operation of the stationary transformer station (2), a first neighboring station (6) is connected (72) to a first network operator feed (10) of the stationary transformer station (2),
- wherein, during normal operation of the stationary transformer station (2), a second neighboring station (8) is connected (72) to a second network operator feed (12) of the stationary transformer station (2),
- wherein the first network operator feed (10) of the stationary transformer station (2) is switched to a de-energized state (74), wherein a load break switch (14) associated with the first network operator feed (10) of the stationary transformer station (2) is opened, and wherein a load break switch (26) associated with the first neighboring station (6) is opened,
- wherein the first network operator feed (10) of the stationary transformer station (2) that is switched to a de-energized state is connected (76) on the medium voltage side to a first network operator feed (30) of a mobile transformer station (4) by means of a first cable connection (50),
- wherein a customer installation (22) is connected (76) on the low voltage side to the mobile transformer station (4) by means of a second cable connection (60),
- wherein the mobile transformer station (4) is operated (78, 80) in parallel with the stationary transformer station (2), wherein the load break switch (26) associated with the first neighboring station (6) is closed, wherein a load break switch (34) associated with the first network operator feed (30) of the mobile transformer station (4) is closed, wherein a safety circuit breaker (40) of the mobile transformer station (4) is closed, and wherein a low-voltage-side load break switch (42) of the mobile transformer station (4) is closed,
- wherein the stationary transformer station (2) is switched to a de-energized state (82) by means of the mobile transformer station (4), wherein the stationary transformer station (2) is disconnected from the medium-voltage network by opening a load break switch (28) of the second neighboring station (8) and is disconnected from the customer installation (22) by opening an isolator switch (24) of the stationary transformer station (2), and wherein the second neighboring station (8) is disconnected from the second network operator feed (12) of the stationary transformer station (2),
- wherein the second network operator feed (12) of the stationary transformer station (2) that is switched to a de-energized state is connected on the medium voltage side to a second network operator feed (32) of the mobile transformer station (4) by means of a cable connection (51), and
- wherein the load break switch (28) of the second neighboring station (8) is closed.

2. Method according to claim 1, wherein the low-voltage-side load break switch (42) of the mobile transformer station (4) can only be closed if a phase position on both sides of the load break switch (42) substantially coincides.

3. Method according to either of the preceding claims, wherein the mobile transformer station (4) comprises a transformer (38) which is designed as an oil-insulated transformer and/or variable-ratio transformer.

4. Mobile transformer station (4) which is designed for the method according to any of the preceding claims.

5. Ring network (118) comprising a stationary transformer station (2) and a mobile transformer station (4) according to claim 4.

## Revendications

1. Procédé d'entretien hors tension d'une station de transformateur fixe (2) sur un réseau de moyenne tension,
- dans lequel, dans un fonctionnement normal de la station de transformateur fixe (2), une première station voisine (6) est reliée (72) à une première alimentation d'opérateur de réseau (10) de la station de transformateur fixe (2),
- dans lequel dans le mode normal de la station de transformateur fixe (2) une deuxième station voisine (8) est reliée (72) à une deuxième alimentation d'opérateur de réseau (12) de la station de transformateur fixe (2),
- dans lequel la première alimentation d'opérateur de réseau (10) de la station de transformateur fixe (2) est commutée (74) hors tension, dans lequel un interrupteur-sectionneur (14) associé à la première alimentation d'opérateur de réseau (10) de la station de transformateur fixe (2) est ouvert, et dans lequel un interrupteur-sectionneur (26) associé à la première station voisine (6) est ouvert,
- dans lequel la première alimentation d'opérateur de réseau (10) commutée hors tension de la station de transformateur fixe (2) est reliée (76) côté moyenne tension à une première alimentation d'opérateur de réseau (10) d'une station de transformateur mobile (4) au moyen d'une première liaison par câble (50),
- dans lequel une installation client (22) est reliée (76) côté basse tension à la station de transformateur mobile (4) au moyen d'une deuxième liaison par câble (60),
- dans lequel la station de transformateur mobile (4) fonctionne (78, 80) parallèlement à la station de transformateur fixe (2), dans lequel l'interrupteur-sectionneur (26) associé à la première station voisine (6) est fermé, dans lequel un interrupteur-sectionneur (34) associé à la première alimentation d'opérateur de réseau (30) de la station de transformateur mobile (4) est fermé, dans lequel un interrupteur-sectionneur à fusible (40) de la station de transformateur mobile (4) est fermé, et dans lequel un interrupteur-sectionneur (42) côté basse tension de la station de transformateur mobile (4) est fermé,
- dans lequel la station de transformateur fixe (2) est commutée (82) hors tension au moyen de la station de transformateur mobile (4), dans lequel la station de transformateur fixe (2) est séparée du réseau de moyenne tension par ouverture d'un interrupteur-sectionneur (28) de la deuxième station voisine (8) et de l'installation client (22) par ouverture d'un interrupteur-sectionneur (24) de la station de transformateur fixe (2), et dans lequel la deuxième station voisine (8) est séparée de la deuxième alimentation d'opérateur de réseau (12) de la station de transformateur fixe (2),
- dans lequel la deuxième alimentation d'opérateur de réseau (12) commutée hors tension de la station de transformateur fixe (2) est reliée côté moyenne tension à une deuxième alimentation d'opérateur de réseau (32) de la station de transformateur mobile (4) au moyen d'une liaison par câble (51), et
- dans lequel l'interrupteur-sectionneur (28) de la deuxième station voisine (8) est fermé.

2. Procédé selon la revendication 1, dans lequel l'interrupteur-sectionneur (42) côté basse tension de la station de transformateur mobile (4) ne peut être fermé que si une position de phase des deux côtés de l'interrupteur-sectionneur (42) coïncide sensiblement.

3. Procédé selon l'une quelconque des revendications précédentes, dans lequel la station de transformateur mobile (4) comprend un transformateur (38), qui est réalisé sous la forme d'un transformateur isolé à l'huile et/ou transformateur de réglage.

4. Station de transformateur mobile (4), laquelle est réalisée pour le procédé selon l'une quelconque des revendications précédentes.

5. Réseau en anneau (118) avec une station de transformateur fixe (2) et une station de transformateur mobile (4) selon la revendication 4.
